# EUROPEAN PATENT APPLICATION

(11) **EP 4 807 235 A1**
(43) Date of publication of application: **16.09.2026**
(21) Application number: 23958345.3
(22) Date of filing: 10.11.2023
(51) Int. Cl.: F17C 1/06, F16J 12/00

(54) **PRESSURE VESSEL AND METHOD FOR MANUFACTURING PRESSURE VESSEL**

(71) Applicant: Astemo, Ltd., Chiyoda-ku, Tokyo 1000004 (JP)
(72) Inventor: NAKAYAMA Takahiro, Hitachinaka-shi, Ibaraki 312-8503 (JP); SHIN Daejin, Hitachinaka-shi, Ibaraki 312-8503 (JP); MORI Kenichi, Hitachinaka-shi, Ibaraki 312-8503 (JP)
(74) Representative: Weickmann & Weickmann PartmbB
(86) International application number: PCT/JP2023/040637
(87) International publication number: WO 2025/099946

(57) **Abstract**

A pressure vessel is provided that prevents a nozzle section from coming off. The pressure vessel (1) includes: a liner (10) having a cylindrical section (11) extending in an axial direction of itself, a first end (12A), and a second end (12B); a nozzle section (20A) that is provided to cover the first end (12A) and allows pressurized fluid to flow in and out of the liner (10); and fibers wound around the liner (10) and nozzle section (20A), wherein the nozzle section (20A) has a main body extending in the axial direction, a liner-facing end surface (20a), and an opposite end surface (20b), wherein the main body decreases in diameter with increasing distance in the axial direction from the liner (10), and has a reduced-diameter section (22) around which the fibers are wound, and the opposite end surface (20b) is left uncovered by the fibers.

## Description

### TECHNICAL FIELD

The present invention relates to a pressure vessel for storing pressurized fluid and a method for manufacturing the pressure vessel.

### BACKGROUND ART

A pressure vessel storing pressurized fluid, such as a hydrogen tank, has fibers wound around an outer peripheral surface of its liner to enhance strength (see Patent Literature 1).

### PRIOR ART LITERATURES

### Patent Literatures

Patent Literature 1: Japanese Patent Application Publication No. 2021-187094

### SUMMARY OF THE INVENTION

### Problems to be Solved

Such a pressure vessel may not have fibers wound around end surfaces of nozzles, which are provided at ends of the liner to allow a pressurized fluid to flow in and out, due to constraints in the manufacturing process, resulting in the end surfaces being left uncovered by the fibers. In this case, it is desirable to prevent the nozzles from coming off the liner and fibers due to the pressure of the stored pressurized fluid.

The present invention has been devised in view of the above circumstances, and is intended to provide a pressure vessel that can prevent the nozzles from coming off, and a method for manufacturing the pressure vessel.

### Solution to Problems

The present disclosure provides a pressure vessel for storing pressurized fluid within itself, the pressure vessel including: a liner having a cylindrical section extending in an axial direction of itself, a first end as one end in the axial direction of the cylindrical section, and a second end as the other end in the axial direction of the cylindrical section; at least one nozzle section that is provided to cover at least one of the first and second ends and allows the pressurized fluid to flow in and out of the liner; and fibers wound around the liner and nozzle section, wherein the nozzle section has a main body extending in the axial direction, a liner-facing end surface in the axial direction of the main body to face the liner, and an opposite end surface on the opposite side in the axial direction of the main body to the liner, wherein the main body decreases in diameter with increasing distance in the axial direction from the liner, and has a reduced-diameter section around which the fibers are wound, and the opposite end surface of the nozzle section is left uncovered by the fibers.

### Advantageous Effects of Invention

According to the present invention, the fibers over a section between a first outer-diameter section and a second outer-diameter section function as a retainer for the nozzle section, so that the nozzle section can be prevented from coming off.

### BRIEF DESCRIPTION OF DRAWINGS

[FIG. 1] is a schematic cross-sectional view of a pressure vessel according to an embodiment of the present invention;
[FIG. 2] is a schematic cross-sectional view of a liner and an end member, to illustrate a method for manufacturing a pressure vessel according to the embodiment of the present invention; [FIG. 3] is a schematic cross-sectional view of the liner, end member, and a jig, to illustrate the method for manufacturing a pressure vessel according to the embodiment of the present invention;
[FIG. 4] is a schematic cross-sectional view of the liner, end member, and jig, with a first carbon-fiber layer provided, to illustrate the method for manufacturing a pressure vessel according to the embodiment of the present invention;
[FIG. 5] is a schematic cross-sectional view of the liner, end member, and jig, with a second carbon-fiber layer provided, to illustrate the method for manufacturing a fiber-reinforced resin tube according to the embodiment of the present invention; [FIG. 6] is a flowchart for illustrating the method for manufacturing a pressure vessel according to the embodiment of the present invention;
[FIG. 7] is a schematic diagram of a way of forming a carbon-fiber layer using a multi-supply filament winding device, to illustrate the method for manufacturing a pressure vessel according to the embodiment of the present invention;
[FIG. 8] is a schematic diagram of a way of forming a carbon-fiber layer from bobbins of the multi-supply filament winding device, to illustrate the method for manufacturing a pressure vessel according to the embodiment of the present invention;
[FIG. 9] is a schematic cross-sectional view of the liner, end member, and jig, with a fixing member arranged, to illustrate the method for manufacturing a pressure vessel according to the embodiment of the present invention;
[FIG. 10] is a schematic cross-sectional view of an assembly, arranged with the carbon-fiber layer and fixing member, set in a molding device, to illustrate the method for manufacturing a pressure vessel according to the embodiment of the present invention;
[FIG. 11] is a schematic partially-enlarged cross-sectional view of an intermediate product removed from the molding device, to illustrate the method for manufacturing a pressure vessel according to the embodiment of the present invention;
[FIG. 12] is a schematic cross-sectional view of the intermediate product with a groove for removing an end section, to illustrate the method for manufacturing a pressure vessel according to the embodiment of the present invention;
[FIG. 13] is a schematic cross-sectional view of the intermediate product with the end section of the fiber-reinforced resin tube removed, to illustrate the method for manufacturing a pressure vessel according to the embodiment of the present invention; and
[FIG. 14] is a schematic cross-sectional view of a completed product with the jig removed, to illustrate the method for manufacturing a pressure vessel according to the embodiment of the present invention.

### DETAILED DESCRIPTION OF EMBODIMENTS

An embodiment of the present invention is described in detail with reference to the drawings. In the following description, identical components are denoted by the same reference signs, and duplicate descriptions thereof are skipped. Additionally, the referenced drawings may be exaggerated for the purpose of illustration.

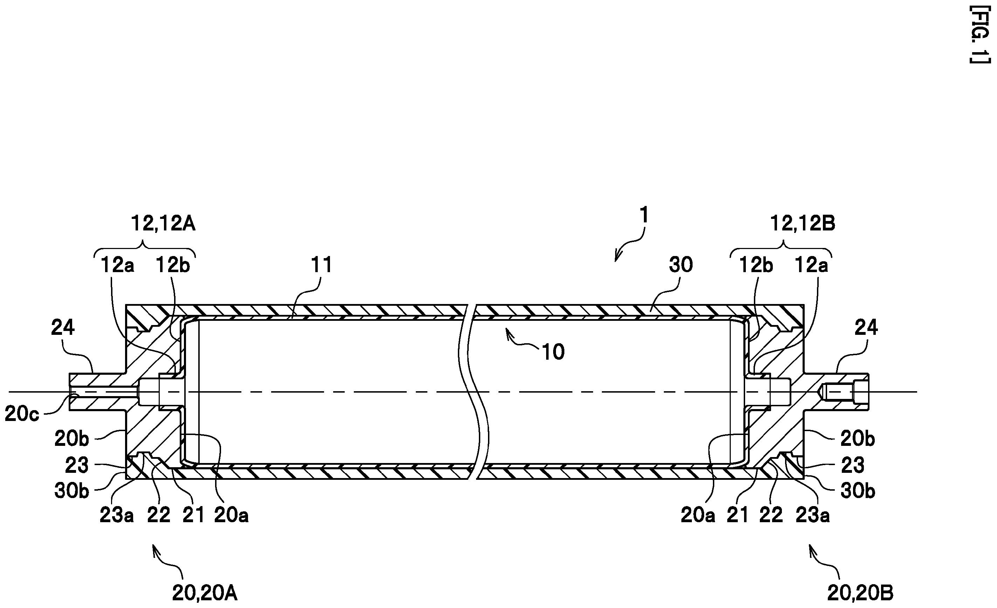

As shown in FIGS. 1 to 3, a pressure vessel 1 according to the embodiment of the present invention is a cylindrical body for storing pressurized fluid within itself. Examples of pressurized fluids include pressurized hydrogen, natural gas, and the like. The pressure vessel 1 includes a liner 10, a pair of end members 20 (20A, 20B), and a fiber-reinforced resin tube 30. Here, one of the pair of end members 20 at one end (first end 12A) in the axial direction of the liner 10 is referred to as an end member 20A. The other of the pair of end members 20 at the other end (second end 12B) in the axial direction of the liner 10 is referred to as an end member 20B.

### <LINER>

The liner 10 is a resin component having a tubular shape (substantially in a cylindrical shape in the embodiment,) with both ends in an axial direction thereof being open. The liner 10 integrally includes a cylindrical section 11 and end sections 12 (12A, 12B).

### <CYLINDRICAL SECTION>

The cylindrical section 11 extends in the axial direction and is the main section in which the pressurized fluid is stored.

### <END SECTION>

The end section 12 is a section as an end in the axial direction of the cylindrical section 11. The end section 12 of the embodiment includes a small-diameter section 12a extending axially from the cylindrical section 11 and an end surface section 12b as a boundary between the cylindrical section 11 and small-diameter section 12a.

### <END MEMBER>

The end member 20 is a metal member (or a resin member) in a substantially cylindrical or columnar shape that is arranged to cover the end section 12 of the liner 10 from a radially outer side and an axially outer side, as an end in the axial direction of the pressure vessel 1. The end member 20 integrally includes, in the order in the axial direction from the liner 10, a first outer-diameter section 21, a reduced-diameter section 22, a second outer-diameter section 23, and a third outer-diameter section 24.

### <<First Outer-diameter Section>>

The first outer-diameter section 21 is a section, as a base end section in the axial direction of the end member 20, arranged to be continuous with the cylindrical section 11 of the liner 10, and has the same outer diameter as the cylindrical section 11 of the liner 10.

### <<Reduced-diameter Section>>

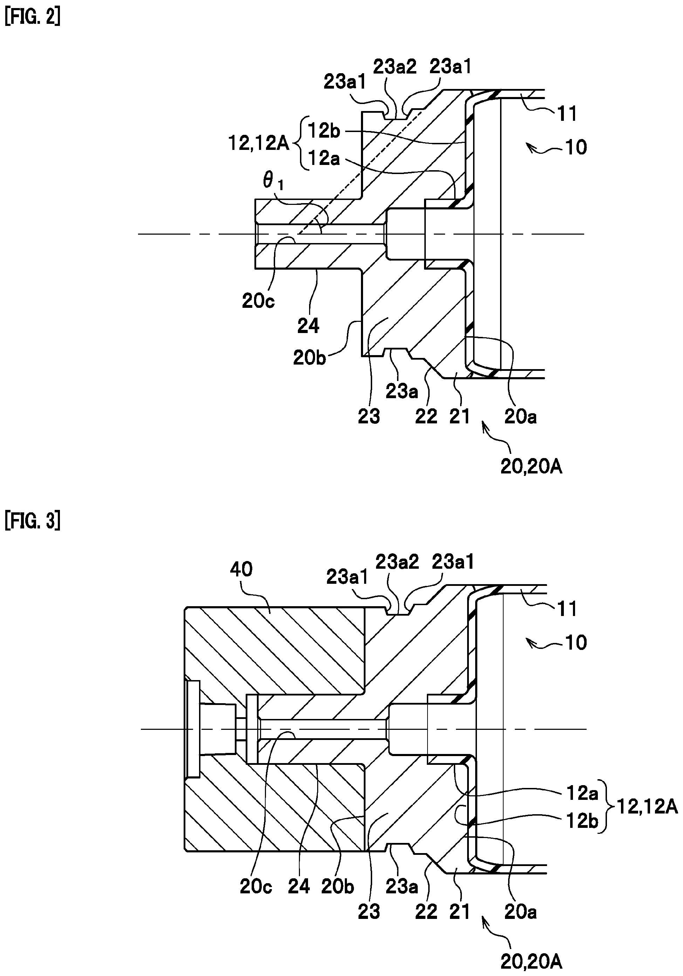

The reduced-diameter section 22 is a section whose outer diameter decreases (reduces in diameter) with increasing distance in the axial direction from the liner 10 (from the first outer-diameter section 21 toward the second outer-diameter section 23). The reduced-diameter section 22 of the embodiment is a tapered section in which its outer diameter linearly decreases with increasing distance from the first outer-diameter section 21 toward the second outer-diameter section 23. An inclination angle θ₁ of an outer peripheral surface of the reduced-diameter section 22, as a tapered section, (with respect to the axial direction of the cylindrical section 11) is 30° to 60° (see FIG. 2)

### <<Second Outer-diameter Section>>

The second outer-diameter section 23 has an outer diameter smaller than that of the first outer-diameter section 21. The second outer-diameter section 23 is formed in its peripheral surface with a recess 23a. The recess 23a is a portion in which carbon-fiber layers 31 and 32, to be described below, are accommodated, and is an annular groove in the case of the embodiment. That is, a width (axial dimension) of the recess 23a is larger than a width dimension (outer diameter) of one carbon-fiber aggregate of the carbon-fiber layers 31 and 32 to be described below. In the case of the embodiment, the first carbon-fiber layer 31 is partly accommodated in the recess 23a, while the rest of the first carbon-fiber layer 31 and the second carbon-fiber layer 32 are located radially outer than a space in the recess 23a.

A pair of side surfaces 23a1 in the recess 23a preferably has a tapered shape that widens (increases in width) with increasing distance from a bottom surface 23a2 in the recess 23a toward an opening of the recess. Various dimensions of the recess 23a (depth of the recess 23a, angle of the side surface 23a1 with respect to the bottom surface 23a2, axial dimensions of the side surface 23a1 and bottom surface 23a2, distance from the reduced-diameter section 22, and the like) can be suitably set, according to an outer diameter of the section where the recess 23a is formed, outer diameters of the carbon-fiber layers 31 and 32, and the like.

### <<Third Outer-diameter Section>>

The third outer-diameter section 24 is a section, as a forefront section in the axial direction of the end member 20, and has an outer-diameter section smaller than that of the second outer-diameter section 23.

### <<End Surfaces>>

The end member 20 has a liner-facing end face 20a and an opposite end face 20b, as surfaces intersecting (being perpendicular to) its axis. The liner-facing end surface 20a is an end surface of the first outer-diameter section 21 and abuts against an end surface 12b of the liner 10. The opposite end surface 20b is an end surface at a boundary between the second outer-diameter section 23 and third outer-diameter section 24.

### <<Flow Passage>>

The end member 20A as a nozzle section is formed with a flow passage 20c. The flow passage 20c penetrates the end member 20A in the axial direction and communicates with an internal space in the small-diameter section 12a of the liner 10. The flow passage 20c is used for an external pressurized fluid to flow therethrough into, and is stored in, the liner 10, and for a pressurized fluid stored in the liner 10 to flow out to the outside. The flow passage 20c has a valve member (not shown) or the like attached to its opening on the opposite side thereof to the liner 10.

### <Fiber-reinforced Resin Tube>

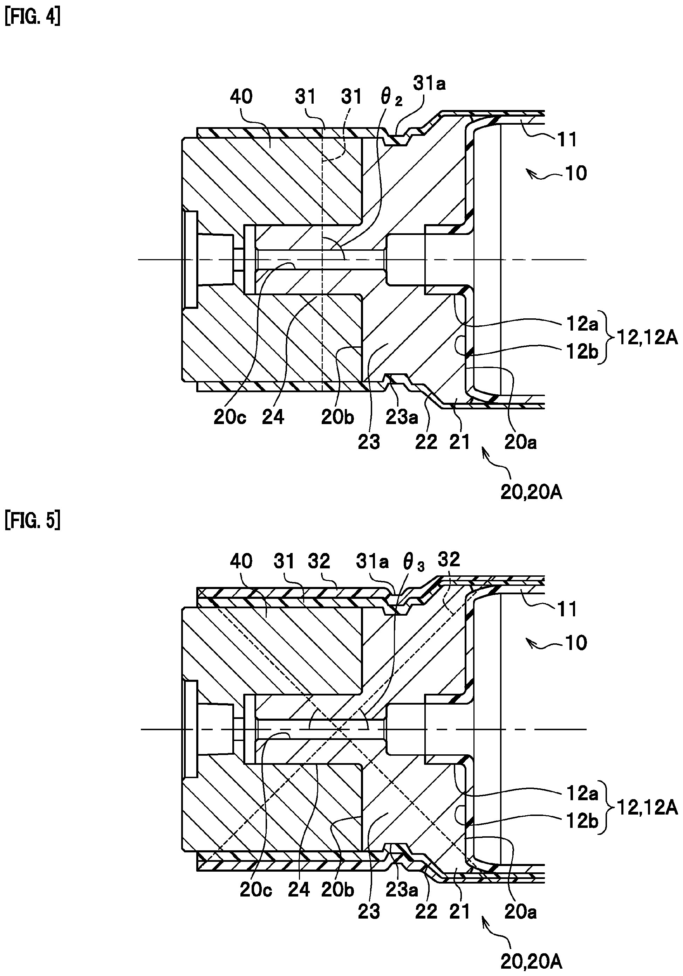

The fiber-reinforced resin tube 30 is formed with a fiber-reinforced resin layer (fiber-containing resin layer) in a cylindrical shape so as to fit along outer peripheral surfaces of the liner 10 and end members 20. As shown in FIGS. 4 and 5, the fiber-reinforced resin tube 30 includes a first carbon-fiber layer 31 and a second carbon-fiber layer 32, as carbon-fiber layers, in the order from the radially inner side (i.e., the liner 10 and end member 20). The first carbon-fiber layer 31 and second carbon-fiber layer 32 have distinct orientation angles from each other. The opposite end surface 20b of the end member 20 and the outer peripheral surface of the third outer-diameter section 24 are not covered by the fiber-reinforced resin tube 30 and are left uncovered by the fiber-reinforced resin tube 30.

### <<First Carbon-fiber Layer (Helical Layer)>>

As shown in FIG. 4, the first carbon-fiber layer 31 is composed of a number of carbon fibers provided on the outer peripheral surfaces of the liner 10 and the like so as to cover the liner 10 and the like. More particularly, a number of carbon fibers are woven into a strip or a bundle to form a carbon-fiber aggregate, and a number of the carbon-fiber aggregates are gathered in distinct phases to form the first carbon-fiber layer 31. The carbon fibers of the first carbon-fiber layer 31 are wound around the liner 10 for at least one full turn so as to be inclined at an angle of 45° with respect to the axial direction of the liner 10, and extend spirally in the axial direction of the liner 10. That is, the carbon fibers of the first carbon-fiber layer 31 have an orientation angle θ₂ of 45° with respect to the axis of the liner 10.

### <<Second Carbon-fiber Layer (Hoop Layer)>>

As shown in FIG. 5, the second carbon-fiber layer 32 is provided on a radially outer side of the first carbon-fiber layer 31 and is composed of a number of carbon fibers provided to cover the first carbon-fiber layer 31. More particularly, a number of carbon fibers are woven into a strip or a bundle to form a carbon-fiber aggregate, and a number of carbon-fiber aggregates are gathered in distinct phases to form the second carbon-fiber layer 32. The carbon fibers of the second carbon-fiber layer 32 are wound around the liner 10 so as to be substantially perpendicular to the axial direction of the liner 10, and extend in the axial direction of the liner 10. That is, the carbon fibers of the second carbon-fiber layer 32 have an orientation angle θ₃ of substantially 90° with respect to the axis of the liner 10.

### <Manufacturing Method>

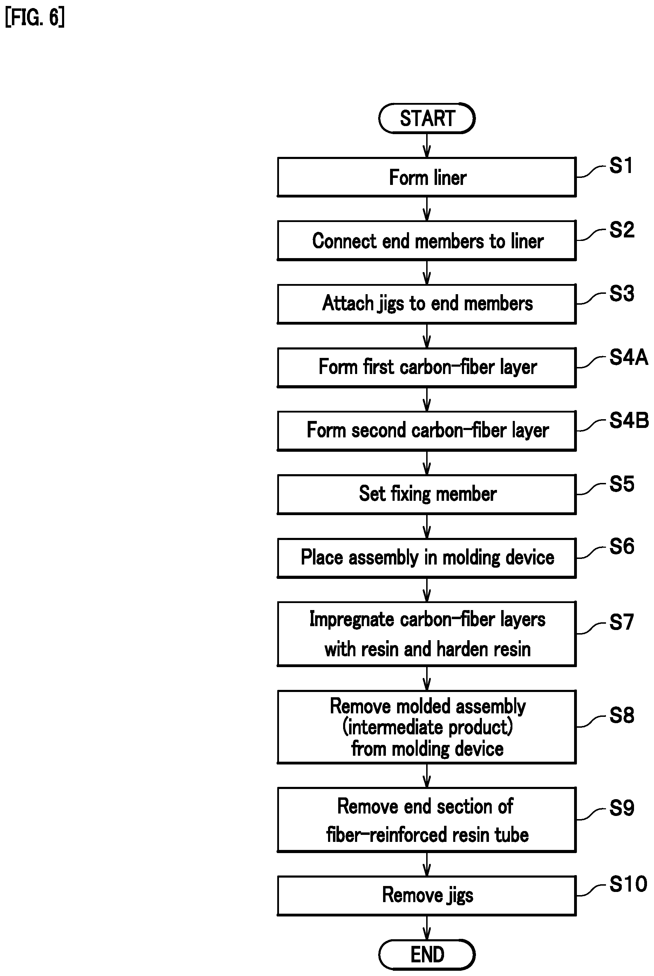

Next, a method for manufacturing the pressure vessel 1 according to the embodiment of the present invention is described using a flowchart in FIG. 6. The method for manufacturing the pressure vessel 1 includes a liner formation step (step S1) and an end-member connection step (step S2) that is executed after the liner formation step. The method of manufacturing the pressure vessel 1 also includes a jig attachment step (step S3) that is executed after the end-member connection step, and a fiber arrangement step (steps S4A and S4B) that is executed after the jig attachment step. The method for manufacturing the pressure vessel 1 also includes a fixing-member placement step (step S5) that is executed after the fiber arrangement step, and an in-mold placement step (step S6) that is executed after the fixing-member placement step. The method for manufacturing the pressure vessel 1 also includes a molding step (step S7) that is executed after the in-mold placement step, and a removal step (step S8) that is executed after the molding step. The method for manufacturing the pressure vessel 1 also includes an end trimming step (step S9) that is executed after the removal step, and a jig detachment step (step S10) that is executed after the end trimming step.

### <<Control Unit in Computation Node>>

Step S1 is a step of forming the resin liner 10 in FIG. 1, using a molding device (not shown).

In step S2 to follow step S1, the liner 10 and pair of end members 20 are connected to each other, as shown in FIG. 2.

In step S3 to follow step S2, a pair of jigs 40 are attached to the pair of end members 20, respectively, as shown in FIG. 3. The jig 40 is fitted onto the third outer-diameter section 24.

In step S4A to follow step S3, the first carbon-fiber layer 31 is formed on outer peripheral surfaces of the cylindrical section 11 of the liner 10, the first outer-diameter section 21, reduced-diameter section 22, second outer-diameter section 23 of the end member 20, and jig 40, as shown in FIG. 4. In step S4B to follow step S4A, the second carbon-fiber layer 32 is formed on an outer peripheral surface of the first carbon-fiber layer 31 arranged on the cylindrical section 11 of the liner 10, the first outer-diameter section 21, reduced-diameter section 22, and second outer-diameter section 23 of the end member 20, and jig 40, as shown in FIG. 5.

In steps S4A and S4B, the carbon-fiber layers 31 and 32 are not made of resin-impregnated fibers but of so-called raw yarn. The carbon-fiber layers 31 and 32 are concurrently arranged on the outer peripheral surfaces of the liner 10, end members 20 and jigs 40, with a multi-supply filament winding (MFW) technique. The carbon-fiber layers 31 and 32, having yarn supplied with the multi-supply filament winding technique, have a so-called non-crimp structure in which the layers are not woven together and are independent from each other.

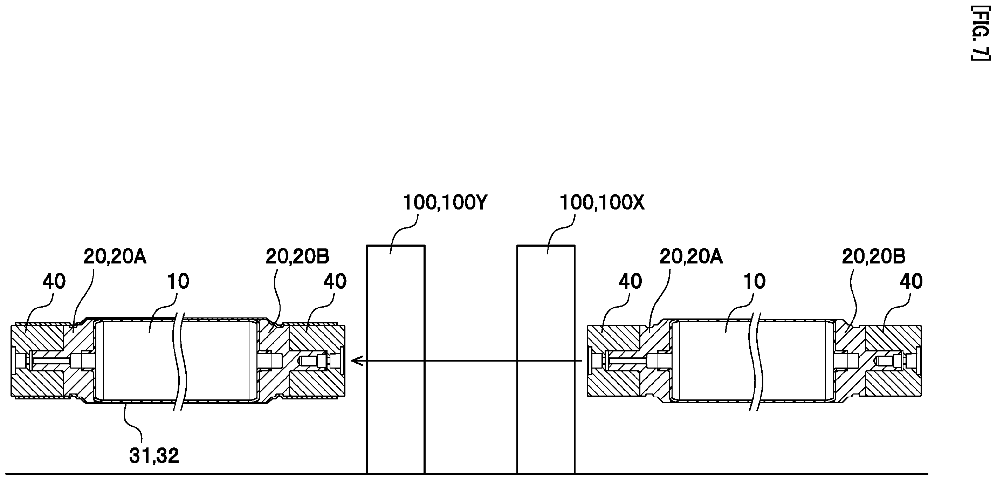

In steps S4A and S4B, the carbon-fiber layers 31 and 32 are arranged on the outer peripheral surfaces of the liner 10, end members 20, and jigs 40 in a single-direction pass(only) by a multi-supply filament winder 100 (100X and 100Y) shown in FIG. 7. Particularly, the carbon-fiber layers 31 and 32 are arranged in a single-direction pass only such that the winding proceeds from the jig 40 at the end member 20A which is one end in the axial direction of the assembly, as a starting point, toward the jig 40 at the end member 20B which is the other end in the axial direction of the assembly. The multi-supply filament winder 100 (100X and 100Y) can suitably change settings of the orientation angles for the carbon-fiber layers 31 and 32. The assembly of the liner 10, end members 20 and jigs 40 passes through the multi-supply filament winders 100X and 100Y, with the one end (end member 20A) as a leading end. The upstream multi-supply filament winder 100X winds the first carbon-fiber layer 31 around the assembly, and the downstream multi-supply filament winder 100Y winds the second carbon-fiber layer 32 around the assembly.

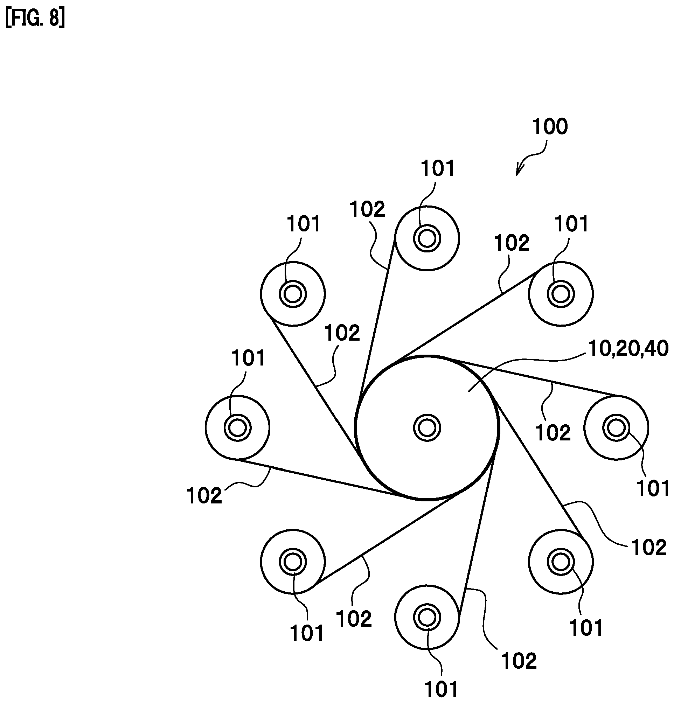

As shown in FIG. 8, the multi-supply filament winder 100 includes a number of bobbins 101 arranged to surround the moving assembly from the radially outer side. The multi-supply filament winder 100 unwinds fiber bundles 102 from the bobbins 101 and winds them around the assembly to form the carbon-fiber layers 31 and 32. Both ends of the fiber bundles 102 forming the carbon-fiber layers 31 and 32 are suitably cut off. Note that the carbon-fiber layers 31 and 32 may be arranged on the outer peripheral surfaces of the liner 10, end members 20 and jigs 40 after the winder having formed an integrated cylindrical shape.

Here, the reduced-diameter section 22 as a linearly tapered section can reduce the carbon-fiber layers 31 and 32 slipping, as compared with an equivalent in a bulging dome shape (having so-called geodesic). In the case of the embodiment, the inclination angle θ₁ (see FIG. 2) of the outer peripheral surface of the reduced-diameter section 22 (with respect to the axial direction of the cylindrical section 11) is set between 30° and 60°. If the inclination angle θ₁ is less than 30°, the axial dimension of the reduced-diameter section 22 increases. If the inclination angle θ₁ is greater than 60°, the carbon-fiber layers 31 and 32 wound around the reduced-diameter section 22 are likely to slip. That is, the reduced-diameter section 22 having the inclination angle θ₁ set between 30° and 60° can suitably reduce the carbon-fiber layers 31 and 32 slipping, while avoiding the axial dimension increasing.

The carbon-fiber layers 31 and 32 are wound around a radially outer side of the recess 23a, partly in the longitudinal direction, at the location where the recess 23a is formed, and thus are positioned at the recess 23a with respect to the end member 20. More particularly, the first carbon-fiber layer 31 is wound so as to be partly accommodated in the recess 23a and thus is positioned with respect to the end member 20. In addition, the second carbon-fiber layer 32 is wound so as to be partly accommodated in a recess 31a defined on an outer peripheral surface of the first carbon-fiber layer 31 so as to correspond to the recess 23a, and thus is positioned with respect to the end member 20 via the first carbon-fiber layer 31. With this configuration, even if the reduced-diameter section 22 of the end member 20 is deformed, the end member 20 is prevented from shifting in position within an internal space defined by the carbon-fiber layers 31 and 32.

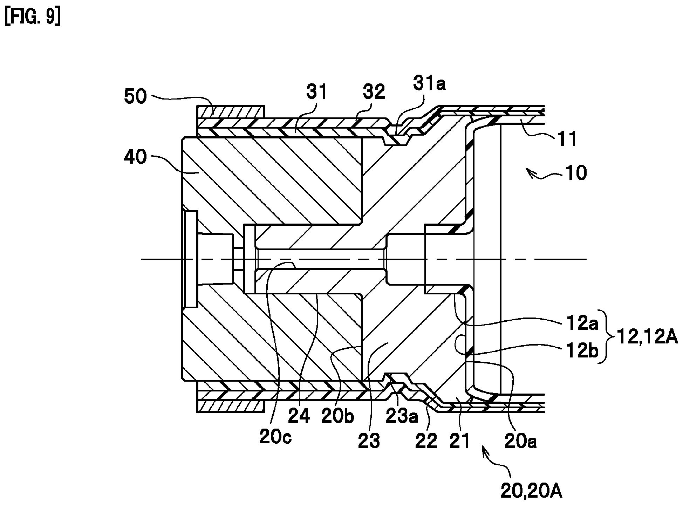

In step S5 to follow step S4B, a fixing member 50 is set on radially outer sides of the ends of the carbon-fiber layers 31 and 32, as shown in FIG. 9, thereby fixing the ends of the carbon-fiber layers 31 and 32 to the jig 40. The fixing member 50 is a metal tape or the like, for example, and is wound around the outer peripheral surfaces of the carbon-fiber layers 31 and 32.

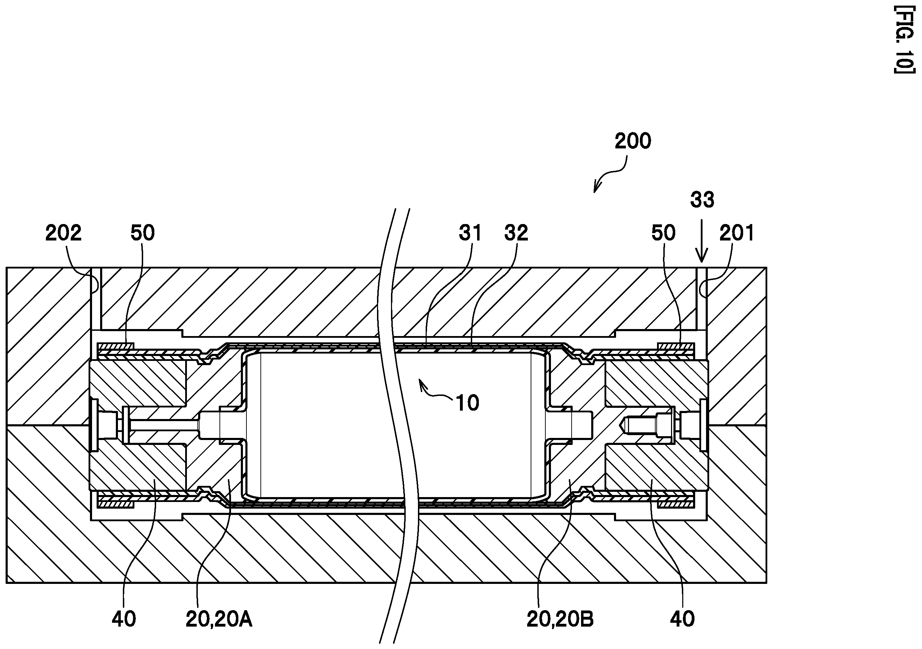

In step S6 to follow step S5, the assembly of the liner 10, end members 20, jigs 40, carbon-fiber layers 31 and 32, and fixing members 50 is placed in a molding device 200 (mold), as shown in FIG. 10.

In step S7 to follow step S6, resin 33 is supplied into the molding device 200, as shown in FIG. 10. This impregnates the carbon-fiber layers 31 and 32, which are arranged on the outer peripheral surfaces of the liner 10, end members 20, and jigs 40, with the resin 33. Then, the molding device 200 is heated to harden the resin 33 to form the fiber-reinforced resin tube 30, using a so-called RTM (Resin Transfer Molding) technique, so that the liner 10, end members 20, and fiber-reinforced resin tube 30 are molded as a single unit. The resin 33 is a thermosetting resin, for example. In the case of the embodiment, the mold of the molding device 200 is divided into multiple parts. In step S7, the assembly is heated and a mold closing operation is executed to close the mold of the molding device 200, and then a mold clamping operation is executed to apply pressure to the closed mold, so that the pressure within the mold is increased to promote the hardening of the resin 33. Note that the mold closing and clamping operations are executed because the mold of the embodiment is divided into multiple pieces, but the mold clamping operation is not essential. When the mold is not divided into multiple pieces, such mold closing and clamping operations are not essential. The molding device 200 may be formed therein with a space (resin reservoir) at an outlet of a gate 201 through which the molten resin 33 is introduced. The resin 33 introduced into the molding device 200 is stored in the resin reservoir located lateral to first ends of the carbon-fiber layers 31 and 32. The resin 33 stored in the resin reservoir is moved in the axial direction of the liner 10 by vacuum suction from a suction port 202 formed on the opposite side, in the direction of the carbon-fiber layers 31 and 32 being arranged, of the device to the gate 201 and impregnates the carbon-fiber layers 31 and 32. The molding device 200 is heated, with the carbon-fiber layers 31 and 32 impregnated with the resin 33, and has pressure applied thereinto to form the fiber-reinforced resin tube 30.

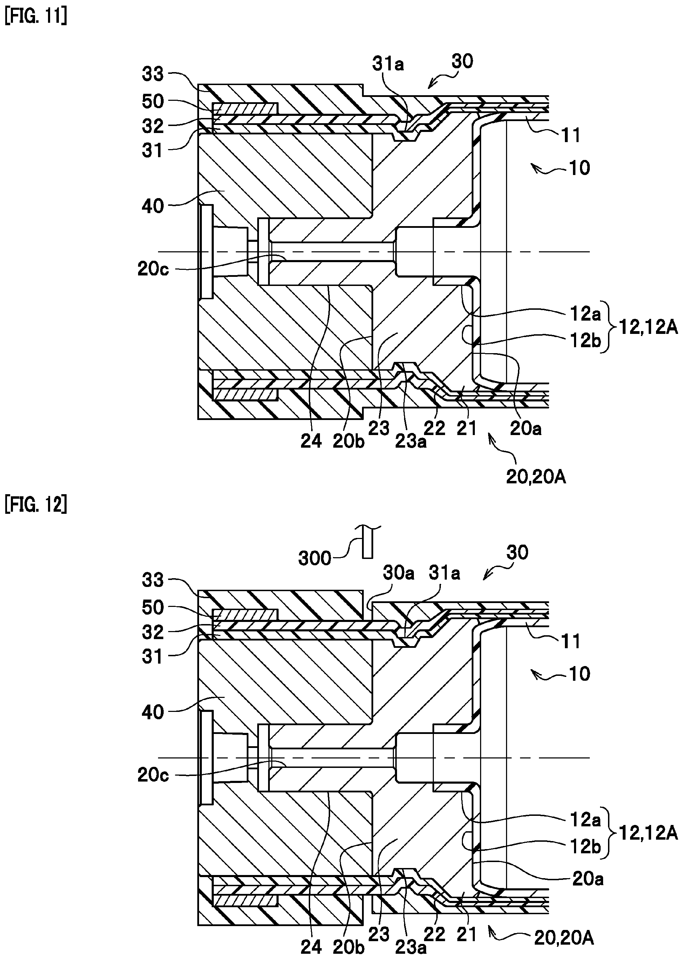

In step S8 to follow step S7, the molded assembly, that is, an intermediate product, is removed from molding device 200, as shown in FIG. 11.

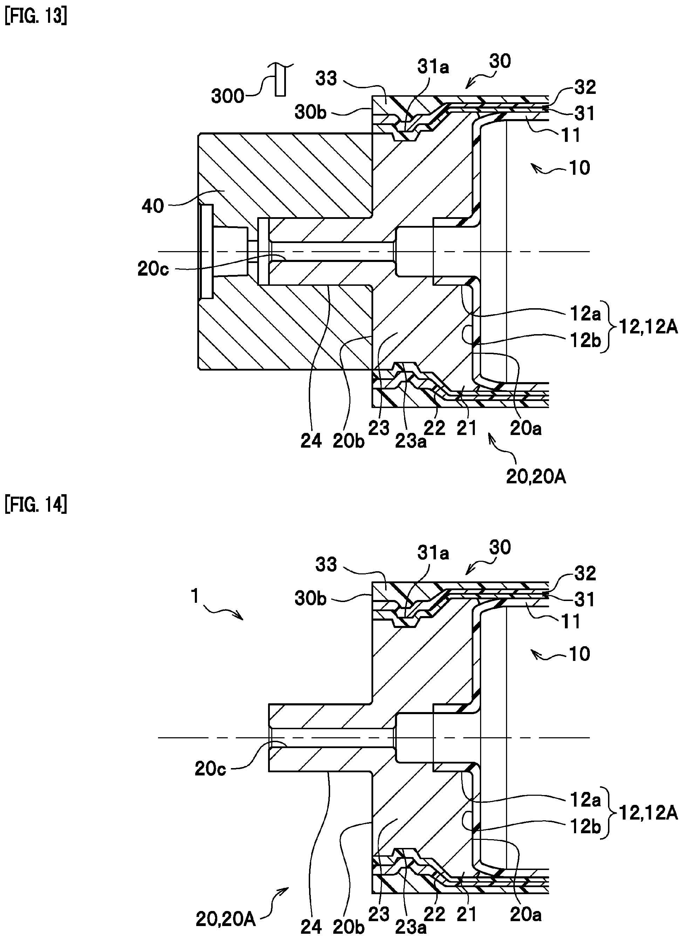

In step S9 to follow step S8, a cutter 300 is used to form a positioning groove 30a at a portion of the fiber-reinforced resin tube 30 on a radially outer side of the opposite end face 20b, as shown in FIG. 12. Next, the cutter 300 is used to remove an end section, beyond the groove 30a, of the fiber-reinforced resin tube 30, as shown in FIG. 13. The remaining fiber-reinforced resin tube 30 does not have the fixing member 50 remaining. This forms a machined surface (cut surface) 30b, as an end surface of the fiber-reinforced resin tube 30 (carbon-fiber layers 31 and 32), at a position substantially the same in the axial direction as the opposite end surface 20b.

In step S10 to follow step S9, the jigs 40 are each removed from the end member 20, as shown in FIG. 14. This completes the pressure vessel 1 (see FIG. 1). The pressure vessel 1 as described above has the opposite end surface 20b of the end member 20 left uncovered by the fiber-reinforced resin tube 30 (carbon-fiber layers 31 and 32). However, the pressure vessel 1 includes the reduced-diameter section 22 of the end member 20 and the fiber-reinforced resin tube 30 (carbon-fiber layers 31 and 32) formed on the outer peripheral surface of the reduced-diameter section 22, thereby preventing the end member 20 (nozzle section 20A) from coming off.

The pressure vessel 1 according to the embodiment of the present invention is the pressure vessel 1 for storing pressurized fluid within itself, and includes: the liner 10 having the cylindrical section 11 extending in the axial direction of itself, the first end 12A as one end in the axial direction of the cylindrical section 11, and the second end 12B as the other end in the axial direction of the cylindrical section 11; the nozzle section 20A that is provided to cover at least one of the first end 12A and second end 12B and allows the pressurized fluid to flow in and out of the liner 10; and fibers(first and second carbon-fiber layers 31 and 32) wound around the liner 10 and nozzle section 20A, wherein the nozzle section 20A has a main body extending in the axial direction, the liner-facing end surface 20a on a side in the axial direction of the main body to face the liner 10, and the opposite end surface 20b on the opposite side in the axial direction of the main body to the liner 10, wherein the main body decreases in diameter with increasing distance in the axial direction from the liner 10, and has the reduced-diameter section 22 around which the fibers are wound, and the opposite end surface 20b of the nozzle section 20A is left uncovered by the fibers. Accordingly, the pressure vessel 1 features that the fibers over the reduced-diameter section 22 function as a retainer for the nozzle section 20A, so that the nozzle section 20A can be prevented from coming off.

The pressure vessel 1 features that the fibers have the machined surface 30b as an end surface. Accordingly, the pressure vessel 1 features that the end member 20 can be suitably covered with the fibers and prevent the end member 20 from coming off, even when the fibers cannot be wound beyond the opposite end surface 20b of the end member 20 (nozzle section 20A), due to manufacturing constraints or the like, resulting in the end surface of the fibers being the machined surface 30b.

The pressure vessel 1 features that the two or more fibers having distinct orientation angles are wound around the cylindrical section 11 and reduced-diameter section 22. Accordingly, the pressure vessel 1 is enhanced in strength and thus capable of storing pressurized fluid at a higher pressure.

The pressure vessel 1 features that the main body has the first outer-diameter section 21 to face the liner, and the second outer-diameter section 23 being closer to the opposite end surface 20b than the first outer-diameter section 21 and having a smaller outer-diameter than the first outer-diameter section 21, with the reduced-diameter section 22 provided between the first outer-diameter section 21 and second outer-diameter section 23, wherein the first outer-diameter section 21 is arranged to be continuous with the cylindrical section 11, and has an outer diameter equal to that of the cylindrical section 11. Accordingly, the pressure vessel 1 is made to avoid the wound fibers having steps in shape to prevent positional unevenness in strength, and thus can store pressurized fluid at a higher pressure.

The pressure vessel 1 features that the reduced-diameter section 22 is a tapered section. Accordingly, the pressure vessel 1 can reduce the fibers slipping during and after manufacturing, as compared with the case where the reduced-diameter section 22 has a curved shape (dome shape).

The pressure vessel 1 features that the inclination angle of the tapered section with respect to the axial direction of the cylindrical section 11 is 30° to 60°. Accordingly, the pressure vessel 1 can suitably reduce the carbon-fiber layers 31 and 32 slipping, while avoiding the axial dimension increasing.

The pressure vessel 1 features that the recess 23a recessed radially inward is formed in the outer peripheral surface(s) of the first outer-diameter section 21 and/or second outer-diameter section 23, and the fibers are accommodated in the recess 23a. Accordingly, the pressure vessel 1 can prevent the fibers from shifting in position.

The pressure vessel 1 features that the recess 23a is an annular groove. Accordingly, the pressure vessel 1 allows the fibers to be positioned over the entire circumferential direction, to suitably prevent the fibers from shifting in position.

In addition, the method for manufacturing the pressure vessel 1 according to an embodiment of the present invention includes: a step of connecting the liner 10 and nozzle section 20A to each other; a step of attaching the jig 40 to the opposite end surface 20b of the nozzle section 20A; a step of winding the fibers around the cylindrical section 11, nozzle section 20A, and jig 40 in s single-direction pass; a step of removing a portion of the fibers wound around the jig 40; and a step of removing the jig 40 from the nozzle section 20A. Accordingly, the method of manufacturing the pressure vessel 1 results in the fibers over the reduced-diameter section 22 functioning as a retainer for the nozzle section, to allow for manufacturing the pressure vessel 1 capable of preventing the nozzle section 20A from coming off. Besides, the method for manufacturing the pressure vessel 1 prevents the nozzle section 20A from coming off, even in the manufacturing stage, thereby enhancing the product quality.

The method of manufacturing the pressure vessel 1 includes, between the step of winding the fibers and the step of removing a portion of the fibers wound around the jig 40: a step of fixing ends of the fibers to the jig 40 using the fixing member 50 and a step of impregnating the fibers with the resin 33 and then hardening the resin. Accordingly, the method for manufacturing the pressure vessel 1 uses the jig 40 to suitably impregnate the fibers with the resin 33, without complicating the shape of the mold, thereby allowing the method to be used for various shapes of the nozzle section and manufacturing costs to be reduced.

Hereinabove, the embodiment of the present invention has been described, but the present invention is not limited to the above-described embodiment and can be modified as appropriate within the scope of the present invention. For example, the carbon-fiber layers 41 and 42 may be woven together to form a so-called crimp structure. In addition, the embodiment may be modified as follows. The fiber is not limited to a carbon fiber, as long as it is a fibrous material (such as a glass fiber and a cellulose fiber) that can reinforce the resin layer. The recess (annular grooves) to accommodate the carbon-fiber layers 31 and 32 may be formed on the outer peripheral surface of at least one of the first and second outer-diameter sections 21 and 23. Three or more fibers having distinct orientation angles from one another may be wound around the liner 10 and nozzle section 20A. The liner 10 may be configured to have one end of the cylindrical section 11 opening and the other end being bottomed. The structure of the nozzle section 20A of the present invention can also be applied to the end member 20B through which pressurized fluid does not flow.

### REFERENCE SIGN LIST

- 1: pressure vessel
- 10: liner
- 11: cylindrical section
- 12 (12A, 12B): end section
- 12a: small-diameter section
- 12b: end surface section
- 20 (20A, 20B): end member (nozzle section)
- 20a: liner-facing end surface
- 20b: opposite end surface
- 20c: flow passage
- 21: first outer-diameter section (main body)
- 22: reduced-diameter section (tapered section) (main body)
- 23: second outer-diameter section (main body)
- 23a: recess (annular groove)
- 24: third outer-diameter section
- 30: fiber-reinforced resin tube
- 30a: groove
- 30b: machined surface
- 31: first carbon-fiber layer
- 32: second carbon-fiber layer
- 33: resin
- 40: jig
- 50: fixing member

## Claims

1. A pressure vessel for storing pressurized fluid within itself, the pressure vessel comprising:
a liner having a cylindrical section extending in an axial direction of itself, a first end as one end in the axial direction of the cylindrical section, and a second end as the other end in the axial direction of the cylindrical section;
at least one nozzle section that is provided to cover at least one of the first and second ends and allows the pressurized fluid to flow in and out of the liner; and
fibers wound around the liner and nozzle section,
wherein the nozzle section has a main body extending in the axial direction, a liner-facing end surface in the axial direction of the main body to face the liner, and an opposite end surface on an opposite side in the axial direction of the main body to the liner,
wherein the main body decreases in diameter with increasing distance in the axial direction from the liner, and has a reduced-diameter section around which the fibers are wound, and
the opposite end surface of the nozzle section is left uncovered by the fibers.

2. The pressure vessel according to claim 1, wherein
the fibers have a machined surface as an end surface.

3. The pressure vessel according to claim 1, wherein
the two or more fibers having distinct orientation angles are wound around the cylindrical section and reduced-diameter section.

4. The pressure vessel according to claim 1, wherein
the main body has a first outer-diameter section to face the liner, and a second outer-diameter section being closer to the opposite end surface than the first outer-diameter section and having a smaller outer-diameter than the first outer-diameter section,
the reduced-diameter section is provided between the first and second outer-diameter sections,
wherein the first outer-diameter section is arranged to be continuous with the cylindrical section, and
the first outer-diameter section has an outer diameter equal to that of the cylindrical section.

5. The pressure vessel according to claim 4, wherein
the reduced-diameter section is a tapered section.

6. The pressure vessel according to claim 5, wherein
an inclination angle of the tapered section with respect to the axial direction of the cylindrical section is 30° to 60°.

7. The pressure vessel according to claim 4, wherein
a recess recessed radially inward is formed in the outer surface(s) of the first outer-diameter section and/or second outer-diameter section, and
the fibers are accommodated in the recess.

8. The pressure vessel according to claim 7, wherein
the recess is an annular groove.

9. A method for manufacturing the pressure vessel according to any one of claims 1 to 8, the method comprising:
a step of connecting the liner and nozzle section to each other;
a step of attaching the jig to the opposite end surface of the nozzle section;
a step of winding the fibers around the cylindrical section, nozzle section, and jig in s single-direction pass;
a step of removing a portion of the fibers wound around the jig; and
a step of removing the jig from the nozzle section.

10. The method for manufacturing the pressure vessel according to claim 9, further comprising, between the step of winding the fibers and the step of removing a portion of the fibers wound around the jig:
a step of fixing ends of the fibers to the jig using a fixing member; and
a step of impregnating the fibers with resin and then hardening the resin.
